# EUROPÄISCHE PATENTANMELDUNG

(11) **EP 0 949 791 A2**
(43) Veröffentlichungstag der Anmeldung: **13.10.1999**
(21) Anmeldenummer: 99103152.7
(22) Anmeldetag: 18.02.1999
(51) Int. Cl.: H04M 1/02

(54) **Türstation einer Türsprechanlage**

(30) Priorität: 11.04.1998 DE 19816391
(71) Anmelder: Ritto - Werk Loh GmbH & Co. KG, 35708 Haiger (DE)
(72) Erfinder: Achenbach, Heinz, Lahn-Dill-Str. 17 (DE)
(74) Vertreter: Fleck, Hermann-Josef, Dr.-Ing.

(57) **Zusammenfassung**

Die Erfindung betrifft eine Türstation einer Türsprechanlage mit einem Aufnahmegehäuse für Moduleinheiten, bei der im Aufnahmegehäuse in einem durch die Moduleinheiten vorgegebenen Raster von Modulaufnahmen Modul-Anschlußbuchsen für die mit Modul-Anschlußstecker versehenen Moduleinheiten angeordnet sind. Die Verdrahtung wird dadurch vereinfacht und erleichtert, daß in dem Aufnahmegehäuse (30) auf das Raster der Modulaufnahmen (A1, A2, A3) abgestimmt Modulanschlußplatinen (10) mit jeweils zwei Bus-Verbindungsbuchsen (11) und einer Modul-Anschlußbuchse (12) befestigt sind, die parallel geschaltet sind, und daß die Modulanschlußplatinen (10) mittels Bus-Verbinder (20), die an beiden Enden mit Bus-Verbindungssteckern (11) versehen und auf den Rasterabstand der Modulaufnahmen (A1, A2, A3) abgestimmt sind, miteinander verbunden sind.

## Beschreibung

Die Erfindung betrifft eine Türstation einer Türsprechanlage mit einem Aufnahmegehäuse für Moduleinheiten, bei der im Aufnahmegehäuse in einem durch die Moduleinheiten vorgegebenen Raster von Modulaufnahmen Modul-Anschlußbuchsen für die mit Modul-Anschlußstecker versehenen Moduleinheiten angeordnet sind.

Eine derartige Türstation ist aus der DE 40 09 190 C1 bekannt. Diese Steckverbindungen zwischen den Moduleinheiten und den Modul-Anschlußbuchsen in den Modulaufnahmen haben den Vorteil, daß die Verdrahtung des oder der Anschlußkabel schon bei der Montage des Aufnahmegehäuses auf einfache Weise vorgenommen werden kann. Die Moduleinheiten können dann erst bei der Inbetriebnahme der Türsprechanlage in die Modulaufnahmen eingebracht werden, wobei sie automatisch mit den Anschlußkabeln und Verbindungskabeln zwischen den Modul-Anschlußbuchsen verbunden werden. Bei einer größeren Türstation mit in horizontalen Zeilen und vertikalen Spalten angeordneten Modulaufnahmen ist immer noch ein erheblicher Verdrahtungsaufwand erforderlich.

Es ist Aufgabe der Erfindung, bei einer Türstation der eingangs erwähnten Art unabhängig vom Umfang der Türstation die Verdrahtung der Modulaufnahmen mit wenigen, einfachen Teilen zu vereinfachen und zu erleichtern, ohne das Prinzip der Steckverbindungen zwischen den Modul-Anschlußsteckern der Moduleinheiten und den in den Modulaufnahmen vorgesehenen Modul-Anschlußbuchsen aufgeben zu müssen.

Diese Aufgabe wird nach der Erfindung dadurch gelöst, daß in dem Aufnahmegehäuse auf das Raster der Modulaufnahmen abgestimmt Modulanschlußplatinen mit jeweils zwei Bus-Verbindungsbuchsen und einer Modul-Anschlußbuchse befestigt sind, die parallel geschaltet sind, und daß die Modulanschlußplatinen mittels Bus-Verbinder, die an beiden Enden mit Bus-Verbindungssteckern versehen und auf den Rasterabstand der Modulaufnahmen abgestimmt sind, miteinander verbunden sind.

Mit vorgefertigten Modulanschlußplatinen und vorgefertigten Bus-Verbindern kann die Verdrahtung einer Türstation auf einfache Weise vorgenommen werden, wobei sich die Anzahl der erforderlichen Modulanschlußplatinen und Bus-Verbinder nach dem Ausbauumfang der Türstation richtet. Dabei können auch nur die für den Anschluß der Anschlußkabel erforderlichen Modulanschlußplatinen vormontiert und vorverdrahtet werden. Die restlichen Modulanschlußplatinen und Bus-Verbinder können auch erst bei der Inbetriebnahme der Türsprechanlage montiert werden, wobei die Montagearbeiten auf ein Minimum beschränkt sind. Selbstverständlich lassen sich Buchsen und Stecker auch vertauscht anbringen.

Die Parallelschaltung der beiden Bus-Verbindungsbuchsen und der Modul-Anschlußbuchse ist dabei vorzugsweise so ausgeführt, daß die beiden Bus-Verbindungsbuchsen und die Modul-Anschlußbuchse einer Modulanschlußplatine adernindividuell mittels gedruckter Leiter parallel geschaltet sind.

Ist nach einer Ausgestaltung vorgesehen, daß bei einem Aufnahmegehäuse mit einer horizontalen Zeile oder einer vertikalen Spalte von n Modulaufnahmen an der freien Bus-Verbindungsbuchse der ersten oder letzten Modulaufnahme ein mit einem Kabel-Anschlußstecker versehenes Anschlußkabel anschaltbar ist, dann ist der Anschluß der Türstation an einem im Gebäude verlegten Anschlußkabel vereinfacht und erleichtert.

Es wird derselbe Vorteil auch bei größeren Türstationen erreicht, wenn vorgesehen ist, daß bei einem Aufnahmegehäuse mit mehreren horizontalen Zeilen und/oder mehreren vertikalen Spalten von Modulaufnahmen die Bus-Systeme der einzelnen Reihen und/oder Spalten mittels Verbindungs-Bussystemen zumindest mit einem Teil der Adern parallel schaltbar sind.

Nach einer bevorzugten Ausgestaltung ist vorgesehen, daß die Moduleinheiten auf quadratische Außenkontur und die Modulaufnahmen auf entsprechende quadratische Innenkontur ausgelegt sind, und daß die Moduleinheiten an zwei aufeinanderstoßenden Seiten mit Modul-Anschlußsteckern versehen sind, die wahlweise auf die Modul-Anschlußbuchse einer Modulaufnahme ausrichtbar sind. Eine mit vertikal ausgerichteter Beschriftung oder dgl. versehene Moduleinheit kann dann in eine Modulaufnahme einer horizontalen Zeile oder einer vertikalen Spalte vertikal ausgerichtet eingesetzt werden.

Die Anordnung und Befestigung der Modulanschlußplatinen im Aufnahmegehäuse ist nach einer Ausgestaltung so vorgenommen, daß das Aufnahmegehäuse eine Trägerplatte aufweist, auf der im Raster eine der Anzahl der Modulaufnahmen entsprechende Anzahl von Modulanschlußplatinen befestigt sind, daß die Bus-Verbindungsbuchsen der Modulanschlußplatinen vorzugsweise außerhalb und die Modul-Anschlußbuchsen innerhalb der zugeordneten Modulaufnahmen angeordnet sind, und daß die Moduleinheiten mit ihren Modul-Anschlußsteckern auf die im Raster angeordneten Modul-Anschlußbuchsen der Modulanschlußplatinen ausrichtbar und mit diesen verbindbar sind. Dabei ist darauf geachtet, daß die Modulanschlußplatinen im Abstand zur Trägerplatte auf dieser befestigt sind, wobei die der Modulaufnahme abgekehrte Seite in eine Nut eines an der Trägerplatte angeformten Haltesteges eingeführt und darin gehalten ist, während die Modulanschlußplatine zumindest teilweise in die zugeordnete Modulaufnahme ragt und mit einer an der Trägerplatte angeformten Schraubhülse verschraubt ist, um eine Gefahr von Kurzschluß zu vermeiden und dennoch den Befestigungsaufwand so gering wie möglich zu halten.

Zur weiteren Vereinfachung der Montage kann zusätzlich vorgesehen sein, daß der Haltesteg zeilen- oder spaltenweise außerhalb der Zeilen oder Spalten der Modulaufnahmen verläuft und die Verschraubung der Modulanschlußplatinen im Bereich der zugeordneten Modulaufnahmen erfolgt, und daß bei einem Aufnahmegehäuse mit mehreren Zeilen oder Spalten von Modulaufnahmen mehrere Trägerplatten verwendet sind, die sich jeweils über eine Zeile oder Spalte erstrecken.

Die Erfindung wird anhand eines in den Zeichnungen dargestellten Ausführungsbeispiels näher erläutert. Es zeigen:
- Fig. 1: Modulanschlußplatinen und Bus-Verbinder, die als Montageteile für die Verdrahtung einer Türstation einer Türsprechanlage verwendbar sind,
- Fig. 2: in Draufsicht ein Aufnahmegehäuse mit einer Spalte von drei Modulaufnahmen und daraufgelegt, das erforderliche Verdrahtungsteil aus vier Modulanschlußplatinen und drei Bus-Verbindern,
- Fig. 3: eine Moduleinheit mit zwei Modul-Anschlußsteckern und
- Fig. 4: im Querschnitt eine Trägerplatte des Aufnahmegehäuses, auf der das Bus-System befestigt wird.

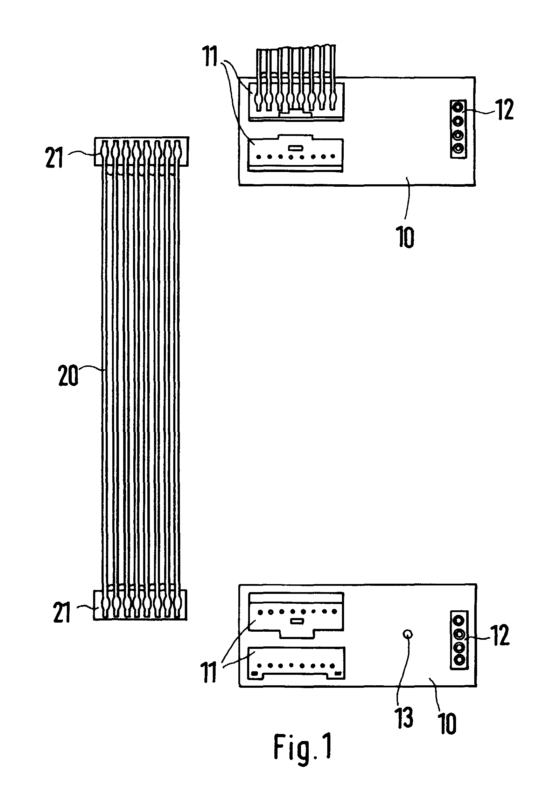

In Fig. 1 sind in Draufsicht die Teile gezeigt, die zur Verdrahtung der Türstation einer Türsprechanlage gemäß der Erfindung erforderlich sind. Im Einzelnen sind dies eine Modulanschlußplatine 10 und ein Bus-Verbinder 20. Die Anzahl dieser Teile richtet sich nach der Größe der Türstation, d.h. nach der Anzahl der in einer horizontalen Zeile oder einer vertikalen Spalte und/oder in einem Rasterfeld vorgesehenen Zeilen oder Spalten untergebrachten Modulaufnahmen.

Die Modulanschlußplatine 10 trägt zwei Bus-Verbindungsstecker 11 und eine Modul-Anschlußbuchse 12 und ist mit einer Befestigungsbohrung 13 versehen. Die beiden Bus-Verbindungsstecker 11 und die Modul-Anschlußbuchse 12 sind adernindividuell parallel geschaltet, was am einfachsten durch mittels in gedruckter Technik auf der Modulanschlußplatine 10 aufgebrachter Leiter realisiert werden kann.

Der Bus-Verbinder 20 ist im wesentlichen ein Abschnitt eines mehradrigen Bandkabels, dessen Enden mit jeweils einem Bus-Verbindungsstecker 21 abgeschlossen sind. Wie gezeigt ist, können benachbarte Modulanschlußplatinen 10 über diese Bus-Verbinder 20 miteinander verbunden werden, wobei die beiden Bus-Verbindungsbuchsen 11 die Weiterführung des Bus auf beiden Seiten der Modulanschlußplatine 10 zulassen. Die auf die Modulaufnahmen des Aufnahmegehäuses ausgerichteten Modulanschlußplatinen 10 werden über die Modul-Anschlußbuchse 12 mit der in die Modulaufnahme eingebrachte und mit einem entsprechenden Modul-Anschlußstecker versehene Moduleinheit durch Stecken miteinander verbunden, wie noch gezeigt wird.

Es darf darauf hingewiesen werden, daß an allen Stellen mit Steckverbindung die Buchsen und Stecker auch vertauscht angebracht sein können.

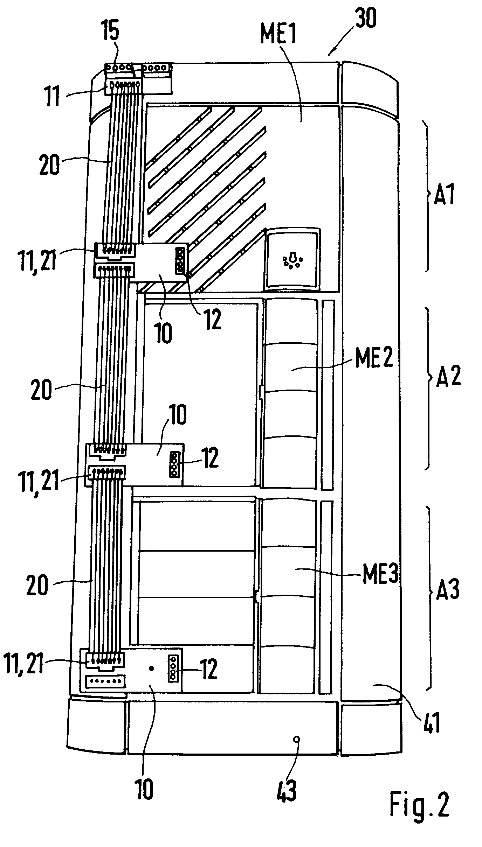

In Fig. 2 ist eine Türstation mit einem Aufnahmegehäuse 30 gezeigt, das in einer einzigen vertikalen Spalte drei Modulaufnahmen A1, A2 und A3 bildet und entsprechend drei Moduleinheiten ME1, ME2 und ME3 aufnimmt und festhält. Die Ausbildung des Aufnahmegehäuses 30 wird nur in dem Umfang erläutert, der für das Einbringen der Verdrahtung der Moduleinheiten erforderlich ist.

Zur Verdrahtung der Moduleinheiten werden, wie der Fig. 2 zu entnehmen ist, vier Modulanschlußplatinen 10 über drei Bus-Verbinder 20 zu einem Bus-System zusammengesteckt. Wie mit 15 angedeutet, kann an der oberen Bus-Verbindungsbuchse 11 der obersten Modulanschlußplatine 10 oder der Modul-Anschlußbuchse 12 ein Kabel-Anschlußstecker angesteckt werden, um Anschlußkabel, die im Gebäude verlegt sind, mit dem Bus-System oder über Verbindungs-Bus-Systeme gleicher Art mit Bus-Systemen benachbarter Spalten von Modulaufnahmen zu verbinden.

Die Moduleinheiten ME1, ME2 und ME3 haben im wesentlichen quadratische Außenkontur und die Modulaufnahmen im wesentlichen quadratische Innenkontur. Die Modulaufnahmen sind von Gehäuseteilen des Aufnahmegehäuses 30 umschlossen, die rahmen- oder gitterförmig die Modulaufnahmen abgrenzen. Die quadratische Form hat den Vorteil, daß die vertikal ausgerichtete Moduleinheit, z.B. ME1, um 90° verdreht auch in eine horizontal ausgerichtete Zeile in richtiger Stellung eingesetzt werden kann.

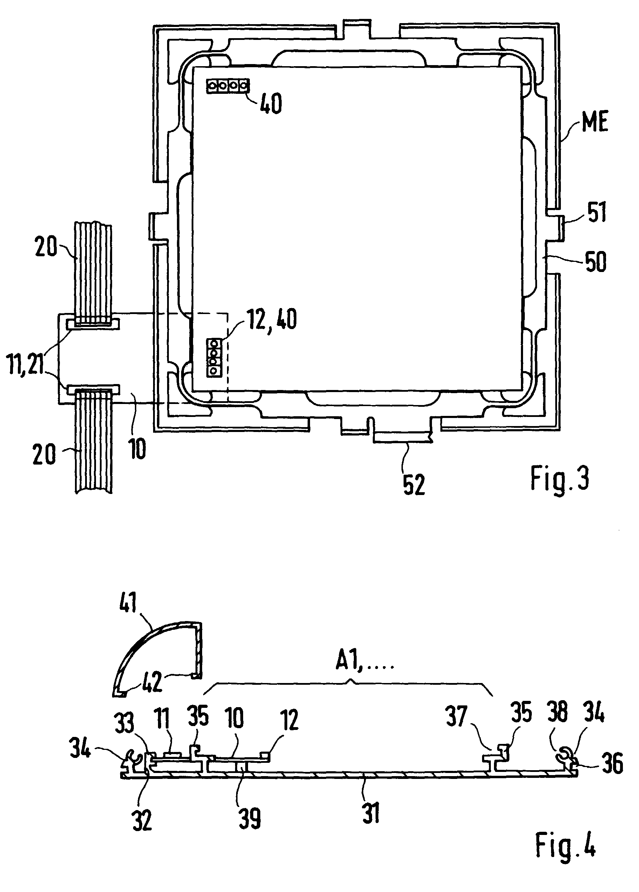

Wie Fig. 3 zeigt, hat die Moduleinheit ME an zwei aufeinanderstoßenden Seiten einen Modul-Anschlußstecker 40. Beide Modul-Anschlußstecker 40 der Moduleinheit ME können wahlweise, je nach gewählter Einsetzstellung mit der Modul-Anschlußbuchse 12 der zu belegenden Modulaufnahme verbunden werden. Dabei kann die Moduleinheit ME ein Verschlußelement 50 mit Verschlußhaken 51 und einer Verstellhandhabe 52 tragen, mit dem die Moduleinheit ME in der Modulaufnahme festgelegt werden kann.

Wie Fig. 4 zeigt, weist das Aufnahmegehäuse 30 eine Trägerplatte 31 auf, auf der das Bus-System, d.h. die Verdrahtung der Türstation befestigt wird. Die gezeigte Trägerplatte 31 ist für eine Zeile oder Spalte von Modulaufnahmen ausgelegt, sie kann in der Breite auch auf mehrere Zeilen und Spalten ausgedehnt werden. Es lassen sich auch mehrere Trägerplatten 31 parallel anordnen und miteinander verbinden.

Auf der Trägerplatte 31 ist außerhalb der Modulaufnahmen A1 bis A3 ein Haltesteg 32 mit einer zu den Modulaufnahmen offenen Nut 33 angeformt. In diese Nut 33 sind die Modulanschlußplatinen 10 mit der der Modulaufnahme A1 bis A3 abgekehrten Seite eingeschoben und darin gehalten. Im Bereich der Modulaufnahmen A1 bis A3 liegt die Modulanschlußplatine 10 auf einer angeformten Schraubhülse 39 und ist mit dieser verschraubt. Damit ist die Modulanschlußplatine 10 eindeutig gehalten und in der Modulaufnahme positioniert. Der Haltesteg 35 für die Moduleinheiten hat an den durch Modulanschlußplatinen 10 belegten Stellen entsprechende Aussparungen, damit die Modulanschlußplatinen 10 mit den Modul-Anschlußbuchsen 12 in den Bereich der Modulaufnahmen eingeführt werden können.

Die beiden Haltestege 35 der Trägerplatte 31 dienen zum Festlegen der Moduleinheiten ME1 bis ME3, wobei zeilen- oder spaltenweise benachbarte Moduleinheiten unmittelbar aneinanderliegen. Lediglich die erste Moduleinheit ME1 und die letzte Moduleinheit ME3 einer Zeile oder Spalte sind durch Abschlußteile 43 am Ende des Aufnahmegehäuses 30 abgeschlossen, wie der Fig. 2 zu entnehmen ist.

Die außerhalb der Modulaufnahmen A1 bis A3 liegenden Teile der Modulanschlußplatinen 10 werden mittels zur Trägerplatte 31 hin offenen Abdeckteilen 41 abgedeckt, deren Schenkel angeformte Raststege 42 tragen. Diese Raststege 42 rasten in Rastnuten 36 und 37 der Stege 34 und 35 ein. An den Stegen 36 sind offene, längsgerichtete Schraubaufnahmen 38 angeformt, die beim Anschrauben der Abschlußteile 43 an die Trägerplatte 31 belegt werden. Die Abschlußteile 43 und die Rahmenteile 41 umschließen rahmenartig das Aufnahmegehäuse 30.

In gleicher Weise können Rahmenteile und Abschlußteile auch ein Gitter bilden, das mehrere Zeilen und/oder Spalten von Moduleinheiten umschließt. Dabei kann sich die Trägerplatte über alle Moduleinheiten erstrecken oder aus mehreren Trägerplatten ähnlich der Fig. 4 zusammengesetzt sein.

## Patentansprüche

1. Türstation einer Türsprechanlage mit einem Aufnahmegehäuse für Moduleinheiten, bei der im Aufnahmegehäuse in einem durch die Moduleinheiten vorgegebenen Raster von Modulaufnahmen Modul-Anschlußbuchsen für die mit Modul-Anschlußstecker versehenen Moduleinheiten angeordnet sind,
dadurch gekennzeichnet,
daß in dem Aufnahmegehäuse (30) auf das Raster der Modulaufnahmen (A1, A2, A3) abgestimmt Modulanschlußplatinen (10) mit jeweils zwei Bus-Verbindungsbuchsen (11) und einer Modul-Anschlußbuchse (12) befestigt sind, die parallel geschaltet sind, und
daß die Modulanschlußplatinen (10) mittels Bus-Verbinder (20), die an beiden Enden mit Bus-Verbindungssteckern (11) versehen und auf den Rasterabstand der Modulaufnahmen (A1, A2, A3) abgestimmt sind, miteinander verbunden sind.

2. Türstation nach Anspruch 1,
dadurch gekennzeichnet,
daß die beiden Bus-Verbindungsbuchsen (11) und die Modul-Anschlußbuchse (12) einer Modulanschlußplatine (10) adernindividuell mittels gedruckter Leiter parallel geschaltet sind.

3. Türstation nach Anspruch 1 oder 2,
dadurch gekennzeichnet,
daß bei einem Aufnahmegehäuse (30) mit einer horizontalen Zeile oder einer vertikalen Spalte von n Modulaufnahmen (A1, A2, A3) an der freien Bus-Verbindungsbuchse (11) der ersten oder letzten Modulaufnahme (A1 bzw. A3) ein mit einem Kabel-Anschlußstecker (15) versehenes Anschlußkabel anschaltbar ist.

4. Türstation nach Anspruch 1 oder 3,
dadurch gekennzeichnet,
daß bei einem Aufnahmegehäuse (30) mit mehreren horizontalen Zeilen und/oder mehreren vertikalen Spalten von Modulaufnahmen (A1, A2, A3) die Bus-Systeme der einzelnen Reihen und/oder Spalten mittels Verbindungs-Bussystemen zumindest mit einem Teil der Adern parallel schaltbar sind.

5. Türstation nach einem der Ansprüche 1 bis 4,
dadurch gekennzeichnet,
daß die Moduleinheiten (ME, ME1, ME2, ME3) auf quadratische Außenkontur und die Modulaufnahmen (A1, A2, A3) auf entsprechende quadratische Innenkontur ausgelegt sind, und
daß die Moduleinheiten (ME, ME1, ME2, ME3) an zwei aufeinanderstoßenden Seiten mit Modul-Anschlußsteckern (40) versehen sind, die wahlweise auf die Modul-Anschlußbuchse (12) einer Modulaufnahme (12) ausrichtbar sind.

6. Türstation nach einem der Ansprüche 1 bis 5,
dadurch gekennzeichnet,
daß das Aufnahmegehäuse (30) eine Trägerplatte (31) aufweist, auf der im Raster eine der Anzahl der Modulaufnahmen (A1, A2, A3) entsprechende Anzahl von Modulanschlußplatinen (10) befestigt sind,
daß die Bus-Verbindungsbuchsen (11) der Modulanschlußplatinen (10) vorzugsweise außerhalb und die Modul-Anschlußbuchsen (12) innerhalb der zugeordneten Modulaufnahmen (A1, A2, A3) angeordnet sind, und
daß die Moduleinheiten (ME, ME1, ME2, ME3) mit ihren Modul-Anschlußsteckern (40) auf die im Raster angeordneten Modul-Anschlußbuchsen (12) der Modulanschlußplatinen (10) ausrichtbar und mit diesen verbindbar sind.

7. Türstation nach Anspruch 6,
dadurch gekennzeichnet,
daß die Modulanschlußplatinen (10) im Abstand zur Trägerplatte (31) auf dieser befestigt sind, wobei die der Modulaufnahme (A1, A2, A3) abgekehrte Seite in eine Nut (33) eines an der Trägerplatte (31) angeformten Haltesteges (32) eingeführt und darin gehalten ist, während die Modulanschlußplatine (10) zumindest teilweise in die zugeordnete Modulaufnahme (A1, A2, A3) ragt und mit einer an der Trägerplatte (31) angeformten Schraubhülse (39) verschraubt ist.

8. Türstation nach Anspruch 7,
dadurch gekennzeichnet,
daß der Haltesteg (32) zeilen- oder spaltenweise außerhalb der Zeilen oder Spalten der Modulaufnahmen (A1, A2, A3) verläuft und die Verschraubung der Modulanschlußplatinen (10) im Bereich der zugeordneten Modulaufnahmen (A1, A2, A3) erfolgt.

9. Türstation nach einem der Ansprüche 6 bis 8,
dadurch gekennzeichnet,
daß bei einem Aufnahmegehäuse (30) mit mehreren Zeilen oder Spalten von Modulaufnahmen (A1, A2, A3) mehrere Trägerplatten (31) verwendet sind, die sich jeweils über eine Zeile oder Spalte erstrecken.

10. Türstation nach einem der Ansprüche 1 bis 9,
dadurch gekennzeichnet,
daß die außerhalb der Modulaufnahmen (A1, A2, A3) liegenden Teile der Modulanschlußplatinen (10) und die mit diesen verbundenen Bus-Verbinder (20) sowie Verbindungs-Bus-Systeme durch Gehäuseteile (41) abgedeckt sind, die die Modulaufnahmen (A1, A2, A3) rahmen- oder gitterförmig umschließen, zur Trägerplatte (31) hin offen und mit dieser verbunden sind.
